# EUROPEAN PATENT SPECIFICATION

(11) **EP 3 124 901 B1**
(45) Date of publication and mention of the grant of the patent: **19.09.2018**
(21) Application number: 16169980.6
(22) Date of filing: 17.05.2016
(51) Int. Cl.: F25D 29/00

(54) **Temperature regulating method and refrigerator including a temperature regulating device**
Verfahren zum regeln der Temperatur und Kühlgerät mit Vorrichtung zum regeln der Temperatur
Procédé de régulation de température et réfrigérateur avec dispositif de régulation de température

(30) Priority: 31.07.2015 CN 201510464741
(43) Date of publication of application: 01.02.2017
(73) Proprietor: Xiaomi Inc., Beijing 100085 (CN)
(72) Inventor: WU, Ke, 100085 Haidian District (CN); LIU, Xinyu, 100085 Haidian District (CN)
(74) Representative: Loustalan, Paul William

(56) References cited:
- CA-A1- 2 771 745
- CN-U- 204 115 391
- DE-A1-102012 017 188
- US-A1- 2002 143 643
- Arthurs Deborah: "Back away from the butter! The talking diet fridge that keeps your weight in check", , 11 January 2012 (2012-01-11), XP055315161, Retrieved from the Internet: URL:http://www.dailymail.co.uk/femail/arti cle-2084729/ThinQ-Smart-refrigerator-Talki ng-diet-fridge-keeps-weight-check.html [retrieved on 2016-10-31]
- Saffer Dan: "The Wonderful Possibilities of Connecting Your Fridge to the Internet", , 29 October 2014 (2014-10-29), XP055315340, Retrieved from the Internet: URL:https://www.wired.com/2014/10/is-your- refrigerator-running/ [retrieved on 2016-11-01]
- Jennifer Welsh: "Fridge of the Future Predicts We Will Be Lazy - Discoblog", , 28 December 2010 (2010-12-28), XP055315061, Retrieved from the Internet: URL:http://blogs.discovermagazine.com/disc oblog/2010/12/28/fridge-of-the-future-is-p redicting-we-will-be-lazy/#.WBcXBHrdfSh [retrieved on 2016-10-31]
- Moses Asher: "LG smart fridge tells you what to buy, cook and eat", Las vegas, 11 January 2012 (2012-01-11), XP055315353, Retrieved from the Internet: URL:http://www.smh.com.au/digital-life/hom etech/lg-smart-fridge-tells-you-what-to-bu y-cook-and-eat-20120109-1ps9z.html [retrieved on 2016-11-01]

## Description

### TECHNICAL FIELD

The present disclosure generally relates to the field of control technology, and more particularly, to a temperature regulating method and a temperature regulating device.

### BACKGROUND

With development of technology and improvement of people's life quality, refrigerators as one kind of household appliance have been widely used in families. In the related art, regulation of temperature in a refrigerator has a certain degree of intelligence. For example, the user can set a temperature for a region inside the refrigerator, such as, set refrigeration temperature for the refrigerating region. Then, the refrigerator can automatically regulate the temperature of the refrigerating region to reach the set refrigeration temperature. Alternatively, the user can log in an application (APP) for managing the refrigerator, the APP being bound with the refrigerator in advance. The user can set different temperatures for different regions of the refrigerator. Then, the refrigerator can regulate the temperatures accordingly according to the different temperatures set by the user.

A refrigerator with a camera for observing food is disclosed in published Chinese utility document CN204115391U. Published US patent application US2002/143643A1 discloses a terminal device that is capable of storing data indicating a topic about which information is sought or desired. The terminal can transmit the stored data over an exchange with a network server. DE102012017188A1 discloses a sensor system used to detect the person who wants to use a refrigerator. If the calculation carried out is that the person concerned should not have access to the refrigerator, the control unit blocks the door so that the access is denied.

Articles by Deborah Arthus (Back away from the Butter! The talking diet fridge that keeps your weight in check), Dan Saffer (The wonderful possibilities of connecting your fridge to the internet), and Jennifer Welsh (Fridge of the future predicts we will be lazy) discuss smart-home related concepts with regard to refrigerators.

However, in the related art, the intelligent regulation of the temperature of the refrigerator still requires manually setting first by the user, then regulating temperature according to the set temperature by the refrigerator. The intelligence degree is low, and the user experience is poor.

### SUMMARY OF INVENTION

The invention is defined in the independent claims, to which reference should now be made. Advantageous features are set out in the dependent claims.

In view of the above, the present disclosure provides a temperature regulating method and a refrigerator including a temperature regulating device, to solve the problem that the intelligence degree is low in temperature regulation of a refrigerator.

The technical solution according to embodiments of the present disclosure may have the following beneficial effects.

In the above embodiment, the refrigerator can automatically acquire target preference information about the target user who wants to use the refrigerator, and regulate temperature based on the acquired target preference information, such that the target user can obtain from the refrigerator at a target dinging time point, target food which is in a target food state desired by the target user. Thereby, it can improve the intelligence of the temperature regulation of the refrigerator and improve user experience.

In the above embodiment, the refrigerator can determine the target user of the refrigerator in various manners. Further, the target preference information about the target user can be acquired from historic preference information previously stored in the refrigerator, or by searching through a local area network to which the refrigerator is connected. Then, the refrigerator can automatically regulate temperatures in its different regions to meet the preference of the target user. Thereby, it can improve the intelligence degree of the refrigerator, and improve the user experience.

In the above embodiment, additionally, the refrigerator can automatically decide whether the amount of the target food wanted by the target user is sufficient. If the amount is not sufficient, a notice message can be sent to the target user, for the user to timely supplement the target food. Thereby, it can improve the intelligence degree of the refrigerator, and improve the user experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a temperature regulating method according to an exemplary embodiment of the present disclosure;
Fig. 2 is a flow chart illustrating another temperature regulating method according to an exemplary embodiment of the present disclosure;
Fig. 3 is a block diagram illustrating a temperature regulating device according to an exemplary embodiment of the present disclosure;
Fig. 4 is a block diagram illustrating another temperature regulating device according to an exemplary embodiment of the present disclosure;
Fig. 5 is a block diagram illustrating another temperature regulating device according to an exemplary embodiment of the present disclosure;
Fig. 6 is a block diagram illustrating another temperature regulating device according to an exemplary embodiment of the present disclosure;
Fig. 7 is a block diagram illustrating another temperature regulating device according to an exemplary embodiment of the present disclosure;
Fig. 8 is a block diagram illustrating another temperature regulating device according to an exemplary embodiment of the present disclosure;
Fig. 9 is a block diagram illustrating another temperature regulating device according to an exemplary embodiment of the present disclosure;
Fig. 10 is a block diagram illustrating another temperature regulating device according to an exemplary embodiment of the present disclosure;
Fig. 11 is a block diagram illustrating another temperature regulating device according to an exemplary embodiment of the present disclosure; and
Fig. 12 is a block diagram illustrating a temperature regulating device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used herein are merely for describing a particular embodiment, rather than limiting the present disclosure. As used in the present disclosure and the appended claims, terms in singular forms such as "a", "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present disclosure, a first element can also be referred to as a second element. Similarly, a second element can also be referred to as a first element. Depending on the context, a term "if' as used herein can be interpreted as "when", "where" or "in response to".

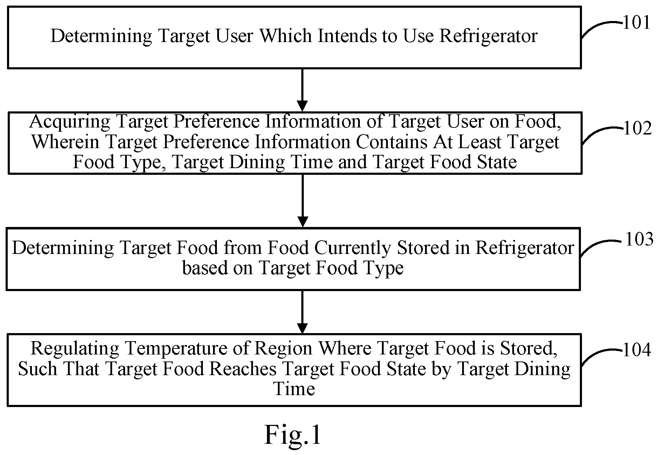

Fig. 1 is a flow chart illustrating a temperature regulating method according to an exemplary embodiment. As shown in Fig. 1, the method is applied in a refrigerator, and includes the following steps.

In step 101, a target user who intends to use the refrigerator is determined.

In the present step, the target user can be determined through one or more of the following manners.

<First Manner> A first user who has logged in an application APP for managing the refrigerator is determined as the target user, wherein the application APP for managing the refrigerator has been previously bound with the refrigerator.

When the first user logs in the application APP for managing the refrigerator, which has been previously bound with the refrigerator, the refrigerator can acquire user information about the first user, so as to determine the first user as the target user.

<Second Manner> A second user who is online through a local area network to which the refrigerator is connected, is determined as the target user.

In the embodiment of the present disclosure, the second user who has logged in the local area network at home can be determined as the target user who intends to use the refrigerator. The refrigerator is connected to the local area network, such that the refrigerator can automatically acquire the second user who is online in the local area network, and can take the acquired second user as the target user.

<Third Manner> The target user is determined through a Global Positioning System.

In step 101-1, location information about a current location of a terminal is acquired through a Global Positioning System, wherein the terminal has been previously bound with the refrigerator.

Based on relevant technology, location information about a current location of at least one terminal can be acquired through a Global Positioning System, the at least one terminal having been previously bound with the refrigerator.

In step 101-2, it is decided whether the terminal is located within a preset distance range from the refrigerator based on the location information. When the terminal is located within the preset distance range, it proceeds to step 101-3.

In the present step, based on the location information, it can be decided whether the terminal is located within the preset distance range. If the terminal is located within the preset distance range, it means that the user of the terminal can arrive at home within a short time such as one hour.

In step 101-3, a third user of the terminal is determined as the target user.

In the embodiment of the present disclosure, the third user who can arrive at home within a short time is taken as the target user who intends to use the refrigerator.

<Fourth Manner> The target user is acquired through a camera connected to the refrigerator.

In this manner, a user can be determined as currently at home through the camera connected to the refrigerator. Where, a camera disposed outside of the refrigerator, for example on top of the refrigerator, or an existing camera at home can be utilized. Thereby, a fifth user at home is taken as the target user.

In the embodiment of the present disclosure, through the camera disposed on top of the refrigerator, a user who has used the refrigerator in a recent time can be determined and taken as the target user.

<Fifth Manner> A fourth user who intends to have a meal is determined as the target user.

In this manner, the refrigerator can inquire family members' schedules, chats, e-mails or the like, to decide whether someone will come to have a meal today. For example, a visitor will come to the house to have meal, and the fourth user who will have a meal is taken as the target user.

In step 102, target preference information of the target user on food is acquired, the target preference information containing at least a target food type, a target dining time and a target food state.

In step 102-1, it is decided whether the target user has used the refrigerator.

In the present step, the refrigerator can automatically decide whether the target user has used the refrigerator based on previously stored user information about users who have used the refrigerator. If the target user has used the refrigerator, it proceeds to step 102-2, otherwise it proceeds to step 102-3.

In step 102-2, historic preference information of the target user, which is pre-stored in the refrigerator, is acquired as the target preference information.

Among the preference information of the users previously stored in the refrigerator, historic preference information corresponding to the target user is taken as the target preference information. The target preference information at least includes a target food type, a target dining time and a target food state. The refrigerator can retrieve a food type selected by the target user when he previously opened the refrigerator as the target food type, retrieve a time point when the target user previously opened the refrigerator to select food as the target dining time, and retrieve a state of the food selected by the user when he previously opened the refrigerator as the target food state.

For example, the target user once took a yellow banana from the refrigerator at 9:00 am. Then, it can be determined that among the target preference information, the target food type is banana, the target dining time is 9:00 am, and the target food state is well matured. However, in order to further improve the user experience, the target food type can be further enlarged as fruit. Thus, once the refrigerator does not store banana, but contains other types of fruits such as an apple, it will nevertheless meet the demand of the target user.

In step 102-3, the target preference information of the target user is searched for, through a local area network to which the refrigerator is connected.

When the target user determined by the refrigerator has never used the refrigerator, the refrigerator has no record relevant to the target user. At this time, the refrigerator can search for information such as food types previously favored by the target user through the connected local area network, as the target preference information.

For example, the target user once searches for a certain type of food through the local area network, for example, a recipe of steaks. Correspondingly, the refrigerator can acquire historic accessing information of the browser through the local area network, so as to determine the target preference information of the target user.

In step 103, target food is determined from food currently stored in the refrigerator based on the target food type.

The target food is determined from the currently stored food through a camera disposed inside the refrigerator. For example, it is acquired through the camera disposed inside the refrigerator that food currently stored in the refrigerator includes: banana, steak, celery, milk, and other food. If the target preference information including a target food type which includes fruit and vegetable, the banana and the celery can be determined from the food currently stored in the refrigerator as the target food.

In the embodiment of the present disclosure, in order to improve the intelligence degree of the refrigerator and improve the user experience, it can prompt the target user when the stored amount of target food required by the target food is not sufficient, for the user to timely supplement the target food. The target preference information also includes a target food amount for a meal.

Optionally, the method also includes the following steps (not shown in Fig. 1).

In step 103-1, it is decided whether the currently stored amount of the target food in the refrigerator is sufficient based on the target food amount for a meal. When the currently stored amount of the target food is not sufficient, it proceeds to step 103-2.

In the present step, based on the target food amount for a meal, it can be decided whether the amount of the target food currently stored in the refrigerator is sufficient. For example, the target food wanted by the target user is steak, and the amount of the target food is 2 pieces. In such case, if currently there is 1 piece of steak stored in the refrigerator, then the refrigerator can decide that the currently stored amount of the target food is not sufficient, and perform step 103-2.

In step 103-2, a notice message is sent to the target user informing that the currently stored amount of the target food is not sufficient.

Optionally, the refrigerator can generate a corresponding notice message, prompting the target user to supplement the corresponding target food, and send the notice message to the target user via a connected local area network.

In step 104, a temperature of a region where the target food is stored is regulated, such that the target food reaches the target food state by the target dining time.

After the refrigerator determines the target food, the temperature of the region where the target food is located is dynamically regulated. As a result, the target user can obtain from the refrigerator the target food in the target food state at the target dinging time point.

For example, the target user usually eats a matured yellow banana at 9:00 am. The refrigerator currently only stores an under-matured green banana. In this case, the refrigerator can regulate the temperature of the refrigerating region, and keep deciding whether the banana reaches a matured state by means of the camera inside the refrigerator, to ensure that when the target user opens the refrigerator at 9:00 am, the green banana has reached a matured state.

Alternatively, the target user wants to obtain an unfrozen steak at 12:30 am. In this case, the refrigerator can regulated the temperature of the freezing region, and raise the temperature of the freezing region before 12:30 am, and keep deciding whether the steak has reached the unfrozen state by means of the camera inside the refrigerator, to ensure that when the target user opens the refrigerator at 12:30 am, the steak is already unfrozen.

In the above embodiment, the refrigerator can automatically acquire target preference information about the target user who wants to use the refrigerator, and regulate temperature based on the acquired target preference information, such that the target user can obtain from the refrigerator at a target dinging time point, target food which is in a target food state desired by the target user. Thereby, it can improve the intelligence degree of the temperature regulation of the refrigerator and improve user experience.

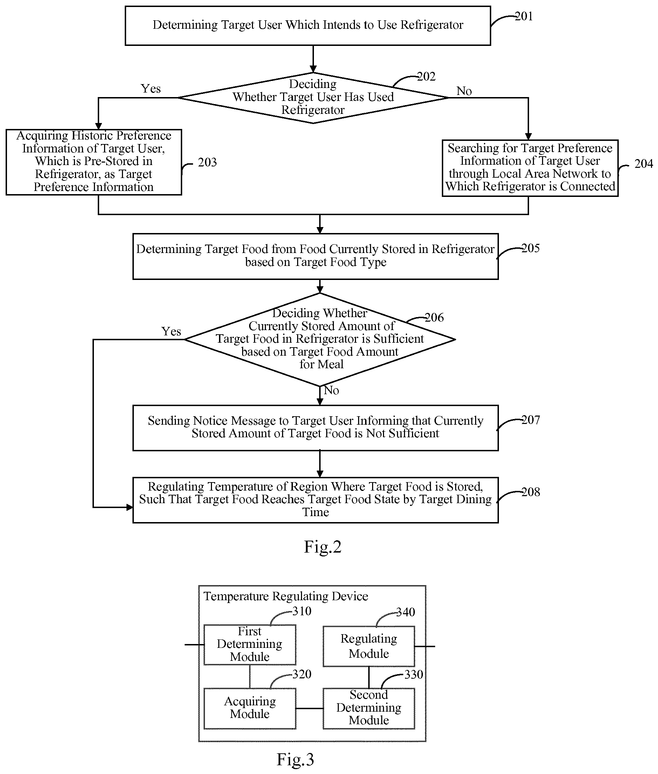

Fig. 2 is a flow chart illustrating a temperature regulating method according to an exemplary embodiment. As shown in Fig. 2, the method is applied in a refrigerator, and includes the following steps.

In step 201, a target user who intends to use the refrigerator is determined.

In the present step, a first user who has logged in an application APP for managing the refrigerator can be determined as the target user, where the application APP for managing the refrigerator has been previously bound with the refrigerator; a second user who is currently online through a local area network at home as the target user; location information about a location of a terminal of a user can be acquired through a Global Positioning System, and a third user who will arrive at home in a short time can be finally determined as the target user; a user who is currently at home or has previously used the refrigerator as acquired by means of a camera connected to the refrigerator, can be determined as the target user; or a fourth user who intends to have a meal can be determined as the target user. Where, the process of determining the target user is similar to the process described in the above step 101, which will not be repeated herein.

In step 202, it is decided whether the target user has used the refrigerator.

In the present step, the refrigerator can automatically decide whether the target user has used the refrigerator based on previously stored user information about users who have used the refrigerator. If the target user has used the refrigerator, it proceeds to step 203, otherwise it proceeds to step 204.

In step 203, historic preference information of the target user, which is pre-stored in the refrigerator, is acquired as the target preference information.

Among the preference information of the users previously stored in the refrigerator, historic preference information corresponding to the target user is taken as the target preference information. The target preference information at least includes a target food type, a target dining time and a target food state. The refrigerator can retrieve a food type selected by the target user when he previously opened the refrigerator as the target food type, retrieve a time point when the target user previously opened the refrigerator to select food as the target dining time, and retrieve a state of the food selected by the user when he previously opened the refrigerator as the target food state.

In step 204, the target preference information of the target user is searched for, through a local area network to which the refrigerator is connected.

When the target user determined by the refrigerator has never used the refrigerator, the refrigerator has no record relevant to the target user. At this time, the refrigerator can search for information such as food types previously favored by the target user through the connected local area network, as the target preference information. For example, the target user once searches for a certain type of food through the local area network, for example, a recipe of steaks. Correspondingly, the refrigerator can acquire historic accessing information of the browser through the local area network, so as to determine the target preference information of the target user.

In step 205, target food is determined from food currently stored in the refrigerator based on the acquired target food type.

The target food is determined from the currently stored food through a camera disposed inside the refrigerator. For example, it is acquired through the camera disposed inside the refrigerator that food currently stored in the refrigerator includes: banana, steak, celery, milk, and other food. If the target preference information including a target food type which includes fruit and vegetable, the banana and the celery can be determined from the food currently stored in the refrigerator as the target food.

In step 206, it is decided whether a currently stored amount of the target food in the refrigerator is sufficient based on the target food amount for a meal. When the currently stored amount is not sufficient, it proceeds to step 207, otherwise it directly proceeds to step 208.

In the present step, it can be decided whether a currently stored amount of the target food in the refrigerator is sufficient based on the target food amount for a meal. When the refrigerator decides that the currently stored amount is not sufficient, it can proceed to step 207.

In step 207, a notice message is sent to the target user informing that the currently stored amount of the target food is not sufficient.

Optionally, the refrigerator can generate a corresponding notice message, prompting the target user to supplement the corresponding target food, and send the notice message to the target user via a connected local area network.

In step 208, a temperature of a region where the target food is stored is regulated, such that the target food reaches the target food state by the target dining time.

After the refrigerator determines the target food, temperature of the region where the target food is located is dynamically regulated. As a result, the target user can obtain from the refrigerator the target food in the target food state at the target dinging time point.

The above process will be described in detail with an example.

The refrigerator determines currently on-line users through a connected local area network as including User A and User B. Also, location information of a terminal of User C can be determined through a Global Positioning System, and based on the location information, it can be decided whether the terminal is located within a preset distance range from the refrigerator. When the terminal is located within the preset distance range, it can be determined that User C can arrive at home in a short time. In addition, the refrigerator inquires the schedule of the family members and acquires that User D will come for dinner. Finally, the refrigerator determines that the target users including User A, User B, User C and User D.

The refrigerator determines that User A, User B and User C have used the refrigerator, and acquires historic preference information of the target users, which is pre-stored in the refrigerator, as the target preference information. Where, User A wants to obtain vegetable from the refrigerator at 6:00 pm; User B wants to obtain 2 pieces of matured fruit from the refrigerator at 7:00 pm; User C wants to obtain a bottle of cool milk from the refrigerator at 11:00 pm; and User D never uses the refrigerator, but a chat record of User D and User A shows that User D wants to obtain 2 pieces of unfrozen steaks from the refrigerator at 6:30 pm.

Based on the above target preference information, the refrigerator determines celery, apples, milk and steaks as the target food from food currently stored in the refrigerator. At this time, it can be further determined whether the currently stored amount of the target food in the refrigerator is sufficient based on target food amount for a meal. If the refrigerator currently stores only 1 piece of fruit, a notice message can be generated to inform the user that the amount of the fruit is not sufficient, and the refrigerator sends the notice message to User B through the local area network.

The refrigerator can regulate temperatures in different regions based on the previously determined target preference information. For example, the refrigerator raises temperature of the freezing region before 6:30 pm, for User D can obtain unfrozen steaks from the freezing region, to meet the target user's demand.

In the above embodiment, the refrigerator can determine the target user of the refrigerator in various manners. Further, the target preference information about the target user can be acquired from historic preference information previously stored in the refrigerator, or by searching through a local area network to which the refrigerator is connected. Then, the refrigerator can automatically regulate temperatures in its different regions to meet the preference of the target user. In addition, the refrigerator can automatically decide whether the amount of the target food wanted by the target user is sufficient. If the amount is not sufficient, a notice message can be sent to the target user, for the user to timely supplement the target food. Thereby, it can improve the intelligence degree of the refrigerator, and improve the user experience.

Corresponding to the above method embodiments, the present disclosure also provides device embodiments.

Fig. 3 is a block diagram illustrating a temperature regulating device according to an exemplary embodiment of the present disclosure. The device is applied in a refrigerator, and includes: a first determining module 310, an acquiring module 320, a regulating module 330 and a regulating module 340.

Where, the first determining module 310 is configured to determine a target user who intends to use the refrigerator;
the acquiring module 320 is configured to acquire target preference information of the target user on food, where the target preference information contains at least a target food type, a target dining time and a target food state;
the second determining module 330 is configured to determine target food from food currently stored in the refrigerator based on the target food type; and
the regulating module 340 is configured to regulate a temperature of a region where the target food is stored, such that the target food reaches the target food state by the target dining time.

In the above embodiment, the refrigerator can automatically acquire target preference information about the target user who wants to use the refrigerator, and regulate temperature based on the acquired target preference information, such that the target user can obtain from the refrigerator at a target dinging time point, target food which is in a target food state desired by the target user. Thereby, it can improve the intelligence degree of the temperature regulation of the refrigerator and improve user experience.

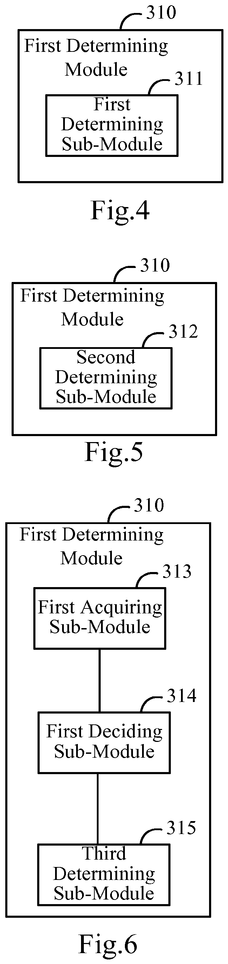

Fig. 4 is a block diagram illustrating another temperature regulating device according to an exemplary embodiment of the present disclosure. As shown in Fig. 4, the embodiment is based on the embodiment as shown in Fig. 3. The first determining module 310 includes: a first determining sub-module 311.

Where, the first determining sub-module 311 is configured to determine a first user who has logged in an application APP for managing the refrigerator as the target user, wherein the application APP for managing the refrigerator has been previously bound with the refrigerator.

In the above embodiment, the refrigerator can acquire user information about a first user who has logged in the application APP for managing the refrigerator, then the refrigerator determines the first user as the target user. Thereby, it can improve the intelligence degreed of temperature regulation, and improve user experience.

Fig. 5 is a block diagram illustrating another temperature regulating device according to an exemplary embodiment of the present disclosure. As shown in Fig. 5, the embodiment is based on the embodiment as shown in Fig. 3. The first determining module 310 includes: a second determining sub-module 312.

Where the second determining sub-module 312 is configured to determine a second user who is online through a local area network to which the refrigerator is connected, as the target user.

In the above embodiment, the refrigerator can determine the second user who is currently on line through the local area network in which the refrigerator is connected as the target user. Thereby, it can improve the intelligence degreed of temperature regulation, and improve user experience.

Fig. 6 is a block diagram illustrating another temperature regulating device according to an exemplary embodiment of the present disclosure. As shown in Fig. 6, the embodiment is based on the embodiment as shown in Fig. 3. The first determining module 310 includes: a first acquiring sub-module 313, a first deciding sub-module 314 and a third determining sub-module 315.

Where the first acquiring sub-module 313 is configured to acquire location information about a current location of a terminal through a Global Positioning System, where the terminal has been previously bound with the refrigerator;
the first deciding sub-module 314 is configured to decide whether the terminal is located within a preset distance range from the refrigerator based on the location information; and
the third determining sub-module 315 is configured to, when the terminal is within the preset distance range, determine a third user of the terminal as the target user.

In the above embodiment, the refrigerator can acquire a location of a terminal through the Global Positioning System, and determine the third user who can arrive at home in a short time as the target user. Thereby, it can improve the intelligence degree of temperature regulation, and improve user experience.

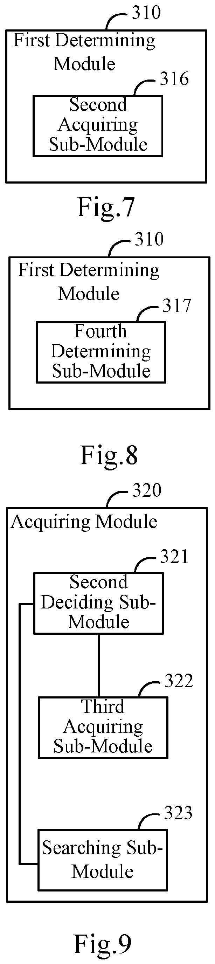

Fig. 7 is a block diagram illustrating another temperature regulating device according to an exemplary embodiment of the present disclosure. As shown in Fig. 7, the embodiment is based on the embodiment as shown in Fig. 3. The first determining module 310 includes: a second acquiring sub-module 316.

Wherein the second acquiring sub-module 316 is configured to acquire the target user through a camera connected to the refrigerator.

In the above embodiment, the refrigerator can determine the fifth user who is currently at home through the camera connected to the refrigerator as the target user, or can acquire a fifth user who opened the refrigerator in a most recent time through the camera as the target user. Thereby, it can improve the intelligence degreed of temperature regulation, and improve user experience.

Fig. 8 is a block diagram illustrating another temperature regulating device according to an exemplary embodiment of the present disclosure. As shown in Fig. 8, the embodiment is based on the embodiment as shown in Fig. 3. The first determining module 310 includes: a fourth determining sub-module 317.

Where the fourth determining sub-module 317 is configured to determine a fourth user who intends to have a meal as the target user.

In the above embodiment, the refrigerator can inquire schedules, chat records or emails of the family members through the connected local area network, and can decide whether someone will come for dinner, for example, whether a visitor will come to the house for dinner, and the refrigerator takes the fourth user as the target user. Thereby, it can improve the intelligence degreed of temperature regulation, and improve user experience.

Fig. 9 is a block diagram illustrating another temperature regulating device according to an exemplary embodiment of the present disclosure. As shown in Fig. 9, the embodiment is based on the embodiment as shown in Fig. 3. The acquiring module 320 includes: a second deciding sub-module 321, a third acquiring sub-module 322 and a searching sub-module 323.

Wherein the second deciding sub-module 321 is configured to decide whether the target user has used the refrigerator;
the third acquiring sub-module 322 is configured to, when the target user has used the refrigerator, acquire historic preference information of the target user, which is pre-stored in the refrigerator, as the target preference information; and
the searching sub-module 323 is configured to, when the target user has never used the refrigerator, search for the target preference information of the target user through a local area network to which the refrigerator is connected.

In the above embodiment, the refrigerator can decide whether the target user has used the refrigerator, and determine the target preference information about the target user through various manners. Thereby, it can ensure the accuracy of the target preference information and improve user experience.

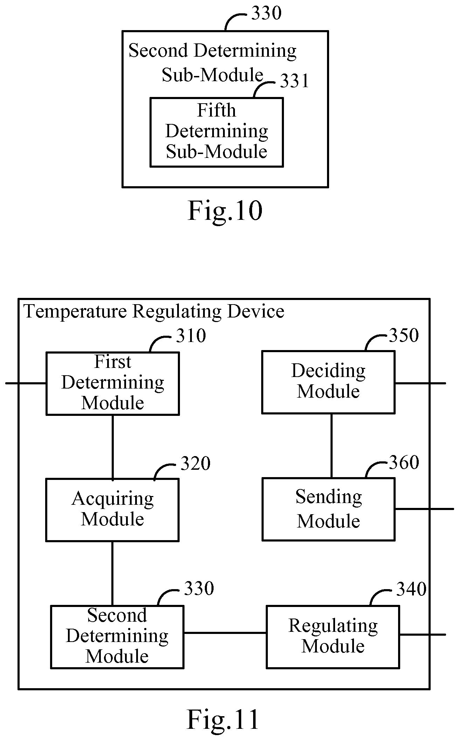

Fig. 10 is a block diagram illustrating another temperature regulating device according to an exemplary embodiment of the present disclosure. As shown in Fig. 10, the embodiment is based on the embodiment as shown in Fig. 3. The second determining sub-module 330 includes: a fifth determining sub-module 331.

Wherein, the fifth determining sub-module 331 is configured to determine the target food from the currently stored food by means of a camera disposed inside the refrigerator.

In the above embodiment, the refrigerator can determine the target food from the currently stored food through the camera provided inside the refrigerator, and thereby it can improve the intelligence degree of the temperature regulation of the refrigerator.

Fig. 11 is a block diagram illustrating another temperature regulating device according to an exemplary embodiment of the present disclosure. As shown in Fig. 11, the embodiment is based on the embodiment as shown in Fig. 3. The target preference information further contains a target food amount for a meal; and
the device further includes: a deciding module 350 and a sending module 360.

Where the deciding module 350 is configured to decide whether a currently stored amount of the target food in the refrigerator is sufficient based on the target food amount for a meal; and
the sending module 360 is configured to, when the currently stored amount is not sufficient, send a notice message to the target user informing that the currently stored amount of the target food is not sufficient.

In the above embodiment, the refrigerator can automatically determine whether the amount of the target food needed by the target user is sufficient. If the amount is not sufficient, a notice message can be sent to the target user for the target user to timely supplement the target food. Thereby, it can improve the intelligence degreed of temperature regulation, and improve user experience.

Implementation of the functions and operations of the modules in the above devices can be specifically referred to the implementation of the corresponding steps in the above methods, which will not be repeated herein.

For the device embodiments, since they correspond to the method embodiments, they can be referred to the related part of the description of the method embodiments. The device embodiments described above are merely illustrative. The units described as separate may be or may not be physically separate, and the components illustrated as a units may be or may not be physical units, and may be at the same location, or may be distributed to multiple units over the network.

Correspondingly, the present disclosure provides a temperature regulating device, which is applied in a refrigerator, wherein the device includes: a processor; and a memory for storing instructions executable by the processor;
wherein the processor is configured to perform:
determining a target user who intends to use the refrigerator;
acquiring target preference information of the target user on food, wherein the target preference information contains at least a target food type, a target dining time and a target food state;
determining target food from food currently stored in the refrigerator based on the target food type; and
regulating a temperature of a region where the target food is stored, such that the target food reaches the target food state by the target dining time.

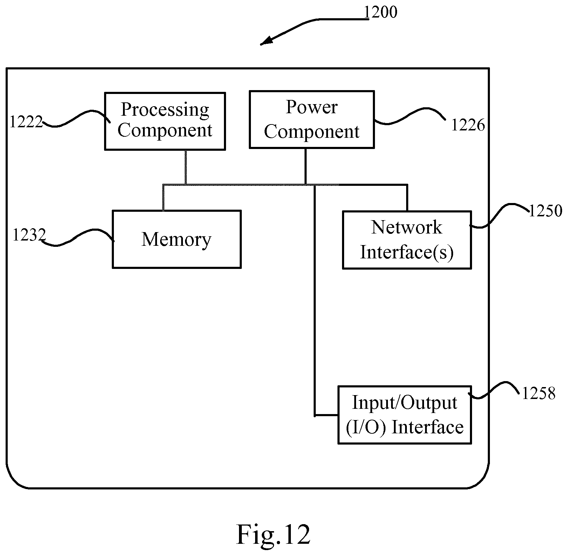

Fig. 12 is a block diagram of a device 1200 for regulating temperature according to an exemplary embodiment. The device 1200 is provided as a refrigerator. Referring to Fig. 12, the device 1200 includes a processing component 1222 that further includes one or more processors, and memory resources represented by a memory 1232 for storing instructions executable by the processing component 1222, such as application programs. The application programs stored in the memory 1232 may include one or more modules each corresponding to a set of instructions. Further, the processing component 1222 is configured to execute the instructions to perform the above described method for regulating temperature.

The device 1200 may also include a power component 1226 configured to perform power management of the device 1200, wired or wireless network interface(s) 1250 configured to connect the device 1200 to a network, and an input/output (I/O) interface 1258. The device 1200 may operate based on an operating system stored in the memory 1232, such as Windows Server™, Mac OS X™, Unix™, Linux™, FreeBSD™, or the like.

## Claims

1. A temperature regulating method, which is applied in a refrigerator, wherein the method comprises:
determining (101) a target user who intends to use the refrigerator;
acquiring (102) target preference information of the target user on food by:
deciding whether the target user has used the refrigerator;
when the target user has used the refrigerator, acquiring historic preference information of the target user, which is pre-stored in the refrigerator, as the target preference information; and
when the target user has never used the refrigerator, searching for the target preference information of the target user through a local area network to which the refrigerator is connected, wherein the target preference information contains at least a target food type, a target dining time and a target food state;
determining (103) target food from food currently stored in the refrigerator based on the target food type by means of a camera disposed inside the refrigerator; and
regulating (104) a temperature of a region where the target food is stored, such that the target food reaches the target food state by the target dining time;
wherein the step of determining a target user who intends to use the refrigerator comprises at least one of:
determining a first user who has logged-in to an application APP for managing the refrigerator as the target user, wherein the application APP for managing the refrigerator has been previously bound with the refrigerator;
determining a second user who is online through a local area network to which the refrigerator is connected, as the target user;
acquiring location information about a current location of a terminal through a Global Positioning System, wherein the terminal has been previously bound with the refrigerator, and deciding whether the terminal is located within a preset distance range from the refrigerator based on the location information, and when the terminal is within the preset distance range, determining a third user of the terminal as the target user;
acquiring the target user through a camera connected to the refrigerator; and
determining a fourth user who intends
to have a meal by inquiring at least one user's schedule or communications information, and determining the fourth user as the target user.

2. The method of claim 1, wherein the target preference information further contains a target food amount for a meal; and
the method further comprises:
deciding whether a currently stored amount of the target food in the refrigerator is sufficient based on the target food amount for a meal; and
when the currently stored amount is not sufficient, sending a notice message to the target user informing the target user that the currently stored amount of the target food is not sufficient.

3. A refrigerator including a temperature regulating device, wherein the device comprises:
a first determining module (310) configured to determine a target user who intends to use the refrigerator;
an acquiring module (320) configured to acquire target preference information of the target user on food, wherein the acquiring module (320) comprises:
a second deciding sub-module (321) configured to decide whether the target user has used the refrigerator;
a third acquiring sub-module (322) configured to, when the target user has used the refrigerator, acquire historic preference information of the target user, which is pre-stored in the refrigerator, as the target preference information; and
a searching sub-module (323) configured to, when the target user has never used the refrigerator, search for the target preference information of the target user through a local area network to which the refrigerator is connected;
wherein the target preference information contains at least a target food type, a target dining time and a target food state;
a second determining module (330) configured to determine target food from food currently stored in the refrigerator by means of a camera disposed inside the refrigerator; and
a regulating module (340) configured to regulate a temperature of a region where the target food is stored, such that the target food reaches the target food state by the target dining time;
wherein the first determining module (310) comprises at least one of:
a first determining sub-module (311) configured to determine a first user who has logged-in to an application APP for managing the refrigerator as the target user, wherein the application APP for managing the refrigerator has been previously bound with the refrigerator;
a second determining sub-module (312) configured to determine a second user who is online through a local area network to which the refrigerator is connected, as the target user;
a first acquiring sub-module (313) configured to acquire location information about a current location of a terminal through a Global Positioning System, wherein the terminal has been previously bound with the refrigerator, and a first deciding sub-module (314) configured to decide whether the terminal is located within a preset distance range from the refrigerator based on the location information, and a third determining sub-module (315) configured to, when the terminal is within the preset distance range, determine a third user of the terminal as the target user;
a second acquiring sub-module (316) configured to acquire the target user through a camera connected to the refrigerator; and
a fourth determining sub-module (317) configured to determine that a fourth user intends to have a meal by inquiring at least one user's schedule or communications information, thereby determining the fourth user as the target user.

4. The device of claim 3, wherein the target preference information further contains a target food amount for a meal; and
the device further comprises:
a deciding module (350) configured to decide whether a currently stored amount of the target food in the refrigerator is sufficient based on the target food amount for a meal; and
a sending module (360) configured to, when the currently stored amount is not sufficient, send a notice message to the target user informing the target user that the currently stored amount of the target food is not sufficient.

5. A program product having stored therein instructions that, when executed by one or more processors of a device applied in a refrigerator, causes the device to perform the method of any of claims 1 to 2.

6. A computer program comprising instructions which, when being executed on a processor of a device applied in a refrigerator, performs the method according to any of claims 1-2.

## Patentansprüche

1. Temperaturregelverfahren, das in einem Kühlschrank angewendet wird, wobei das Verfahren Folgendes beinhaltet:
Bestimmen (101) eines Zielbenutzers, der den Kühlschrank zu benutzen beabsichtigt;
Erfassen (102) von Zielpräferenzinformationen des Zielbenutzers über Lebensmittel durch:
Entscheiden, ob der Zielbenutzer den Kühlschrank benutzt hat;
Erfassen, wenn der Zielbenutzer den Kühlschrank benutzt hat, von in dem Kühlschrank vorgespeicherten historischen Präferenzinformationen des Zielbenutzers als Zielpräferenzinformationen; und
Suchen, wenn der Zielbenutzer den Kühlschrank noch nie benutzt hat, nach den Zielpräferenzinformationen des Zielbenutzers durch ein lokales Netzwerk, an das der Kühlschrank angeschlossen ist, wobei die Zielpräferenzinformationen wenigstens einen Ziellebensmitteltyp, eine Zielessenszeit und einen Ziellebensmittelzustand beinhalten;
Bestimmen (103) von Ziellebensmittel von aktuell im Kühlschrank gelagerten Lebensmitteln auf der Basis des Ziellebensmitteltyps mit Hilfe einer im Kühlschrank angeordneten Kamera; und
Regeln (104) einer Temperatur einer Region, in der das Ziellebensmittel gelagert ist, so dass das Ziellebensmittel den Ziellebensmittelzustand zur Zielessenszeit erreicht;
wobei der Schritt des Bestimmens eines Zielbenutzers, der den Kühlschrank zu benutzen beabsichtigt, wenigstens eines der Folgenden beinhaltet:
Bestimmen eines ersten Benutzers, der sich in eine Applikation APP eingeloggt hat, zum Verwalten des Kühlschranks als Zielbenutzer, wobei die Applikation APP zum Verwalten des Kühlschranks zuvor an den Kühlschrank gebunden wurde;
Bestimmen eines zweiten Benutzers, der durch ein lokales Netzwerk, an das der Kühlschrank angeschlossen ist, online ist, als den Zielbenutzer;
Erfassen von Standortinformationen über einen aktuellen Standort eines Terminals durch ein globales Positionsbestimmungssystem, wobei das Terminal zuvor an den Kühlschrank gebunden wurde, und Entscheiden, ob sich das Terminal innerhalb einer voreingestellten Entfernung von dem Kühlschrank befindet, auf der Basis der Standortinformationen, und Bestimmen, wenn sich das Terminal innerhalb der voreingestellten Entfernung befindet, eines dritten Benutzers des Terminals als Zielbenutzer;
Erfassen des Zielbenutzers durch eine an den Kühlschrank angeschlossene Kamera; und
Bestimmen eines vierten Benutzers, der eine Mahlzeit einzunehmen beabsichtigt, durch Abfragen von Plan- oder Kommunikationsinformationen über wenigstens einen Benutzer, und Bestimmen des vierten Benutzers als den Zielbenutzer.

2. Verfahren nach Anspruch 1, wobei die Zielpräferenzinformationen ferner eine Ziellebensmittelmenge für eine Mahlzeit beinhalten; und
wobei das Verfahren ferner Folgendes beinhaltet:
Entscheiden auf der Basis der Ziellebensmittelmenge für eine Mahlzeit, ob eine derzeit gelagerte Menge des Ziellebensmittels im Kühlschrank ausreicht; und
Senden, wenn die derzeit gelagerte Menge nicht ausreicht, einer Benachrichtigung zum Zielbenutzer, die den Zielbenutzer informiert, dass die derzeit gelagerte Menge des Ziellebensmittels nicht ausreicht.

3. Kühlschrank mit einer Temperaturregelvorrichtung, wobei die Vorrichtung Folgendes umfasst:
ein erstes Bestimmungsmodul (310), konfiguriert zum Bestimmen eines Zielbenutzers, der den Kühlschrank zu benutzen beabsichtigt;
ein Erfassungsmodul (320), konfiguriert zum Erfassen von Zielpräferenzinformationen des Zielbenutzers über Lebensmittel, wobei das Erfassungsmodul (320) Folgendes umfasst:
ein zweites Entscheidungssubmodul (321), konfiguriert zum Entscheiden, ob der Zielbenutzer den Kühlschrank benutzt hat;
ein drittes Erfassungssubmodul (322), konfiguriert zum Erfassen, wenn der Zielbenutzer den Kühlschrank benutzt hat, von im Kühlschrank vorgespeicherten historischen Präferenzinformationen des Zielbenutzers als Zielpräferenzinformationen; und
ein Suchsubmodul (323), konfiguriert zum Suchen, wenn der Zielbenutzer den Kühlschrank noch nie benutzt hat, nach den Zielpräferenzinformationen des Zielbenutzers durch ein lokales Netzwerk, an das der Kühlschrank angeschlossen ist;
wobei die Zielpräferenzinformationen wenigstens einen Ziellebensmitteltyp, eine Zielessenszeit und einen Ziellebensmittelzustand enthalten;
ein zweites Bestimmungsmodul (330), konfiguriert zum Bestimmen von Ziellebensmittel von derzeit im Kühlschrank gelagertem Lebensmittel mit Hilfe einer im Kühlschrank angeordneten Kamera; und
ein Regelmodul (340), konfiguriert zum Regeln einer Temperatur einer Region, in der das Ziellebensmittel gelagert ist, so dass das Ziellebensmittel den Ziellebensmittelzustand zur Zielessenszeit erreicht;
wobei das erste Bestimmungsmodul (310) wenigstens eines der Folgenden umfasst:
ein erstes Bestimmungssubmodul (311), konfiguriert zum Bestimmen eines ersten Benutzers, der sich in eine Applikation APP eingeloggt hat, zum Verwalten des Kühlschranks als Zielbenutzer, wobei die Applikation APP zum Verwalten des Kühlschranks zuvor an den Kühlschrank gebunden wurde;
ein zweites Bestimmungssubmodul (312), konfiguriert zum Bestimmen eines zweiten Benutzers, der durch ein lokales Netzwerk, an das der Kühlschrank angeschlossen ist, online ist, als Zielbenutzer;
ein erstes Erfassungssubmodul (313), konfiguriert zum Erfassen von Standortinformationen über einen aktuellen Standort eines Terminals durch ein globales Positionsbestimmungssystem, wobei das Terminal zuvor an den Kühlschrank gebunden wurde, und ein erstes Entscheidungssubmodul (314), konfiguriert zum Entscheiden auf der Basis von Standortinformationen, ob sich das Terminal innerhalb einer voreingestellten Entfernung von dem Kühlschrank befindet, und ein drittes Bestimmungssubmodul (315), konfiguriert zum Bestimmen, wenn sich das Terminal innerhalb der voreingestellten Entfernung befindet, eines dritten Benutzers des Terminals als Zielbenutzer;
ein zweites Erfassungssubmodul (316), konfiguriert zum Erfassen des Zielbenutzers durch eine an den Kühlschrank angeschlossene Kamera; und
ein viertes Bestimmungssubmodul (317), konfiguriert zum Bestimmen, dass ein vierter Benutzer eine Mahlzeit einzunehmen beabsichtigt, durch Abfragen von Plan- oder Kommunikationsinformationen über einen Benutzer, um dadurch den vierten Benutzer als Zielbenutzer zu bestimmen.

4. Vorrichtung nach Anspruch 3, wobei die Zielpräferenzinformationen ferner eine Ziellebensmittelmenge für eine Mahlzeit beinhalten; und
die Vorrichtung ferner Folgendes umfasst:
ein Entscheidungsmodul (350), konfiguriert zum Entscheiden, ob eine derzeit gelagerte Menge des Ziellebensmittels im Kühlschrank ausreicht, auf der Basis der Ziellebensmittelmenge für eine Mahlzeit; und
ein Sendemodul (360), konfiguriert zum Senden, wenn die derzeit gelagerte Menge nicht ausreicht, einer Benachrichtigung zum Zielbenutzer, die den Zielbenutzer informiert, dass die derzeit gespeicherte Menge des Ziellebensmittels nicht ausreicht.

5. Programmprodukt, auf dem Befehle gespeichert sind, die bei Ausführung durch einen oder mehrere Prozessoren einer Vorrichtung, angewendet in einem Kühlschrank, bewirken, dass die Vorrichtung das Verfahren nach einem der Ansprüche 1 bis 2 durchführt.

6. Computerprogramm, das Befehle umfasst und das bei Ausführung auf einem Prozessor einer Vorrichtung, angewendet in einem Kühlschrank, das Verfahren nach einem der Ansprüche 1-2 durchführt.

## Revendications

1. Procédé de régulation de température, qui est appliqué dans un réfrigérateur, où le procédé comprend :
déterminer (101) un utilisateur cible qui a l'intention d'utiliser le réfrigérateur ;
acquérir (102) des informations de préférences cibles de l'utilisateur cible concernant la nourriture en :
décidant si l'utilisateur cible a utilisé le réfrigérateur ;
lorsque l'utilisateur cible a utilisé le réfrigérateur, acquérir des informations de préférences historiques de l'utilisateur cible, qui sont pré-stockées dans le réfrigérateur, comme les informations de préférences cibles ; et
lorsque l'utilisateur cible n'a jamais utilisé le réfrigérateur, rechercher des informations de préférences cibles de l'utilisateur cible à travers un réseau local auquel le réfrigérateur est connecté, où les informations de préférences cibles contiennent au moins un type de nourriture cible, une heure de dîner cible et un état de nourriture cible ;
déterminer (103) une nourriture cible à partir de la nourriture actuellement conservée dans le réfrigérateur sur la base du type de nourriture cible au moyen d'une caméra disposée à l'intérieur du réfrigérateur ; et
réguler (104) une température d'une région dans laquelle la nourriture cible est conservée, de telle sorte que la nourriture cible atteint l'état de nourriture cible à l'heure de dîner cible ;
où l'étape consistant à déterminer un utilisateur cible qui a l'intention d'utiliser le réfrigérateur comprend au moins l'un d'entre :
déterminer un premier utilisateur qui s'est connecté à une application APP de gestion du réfrigérateur comme l'utilisateur cible, où l'application APP de gestion du réfrigérateur a été associée précédemment au réfrigérateur ;
déterminer un deuxième utilisateur qui est en ligne à travers un réseau local auquel le réfrigérateur est connecté, comme l'utilisateur cible ;
acquérir des informations d'emplacement au sujet d'un emplacement courant d'un terminal au moyen d'un système de navigation par satellite, où le terminal a été précédemment associé au réfrigérateur, et décider si le terminal est situé dans une plage de distance pré-consignée du réfrigérateur sur la base des informations d'emplacement, et lorsque le terminal est dans la plage de distance pré-consignée, déterminer un troisième utilisateur du terminal comme l'utilisateur cible ;
acquérir l'utilisateur cible avec une caméra connectée au réfrigérateur ; et
déterminer un quatrième utilisateur qui a l'intention de prendre un repas en consultant un emploi du temps ou des informations de communications d'au moins un utilisateur, et déterminer le quatrième utilisateur comme l'utilisateur cible.

2. Procédé selon la revendication 1, dans lequel les informations de préférences cibles contiennent en outre une quantité cible de nourriture pour un repas ; et
le procédé comprend en outre :
décider si une quantité actuellement conservée de la nourriture cible dans le réfrigérateur est suffisante sur la base de la quantité cible de nourriture pour un repas ; et
lorsque la quantité actuellement conservée n'est pas suffisante, envoyer un message de notification à l'utilisateur cible informant l'utilisateur cible que la quantité actuellement conservée de la nourriture cible n'est pas suffisante.

3. Réfrigérateur comprenant un dispositif de régulation de température, dans lequel le dispositif comprend :
un premier module de détermination (310) configuré pour déterminer un utilisateur cible qui a l'intention d'utiliser le réfrigérateur ;
un module d'acquisition (320) configuré pour acquérir des informations de préférences cibles de l'utilisateur cible concernant la nourriture, où le module d'acquisition (320) comprend :
un deuxième sous-module de décision (321) configuré pour décider si l'utilisateur cible a utilisé le réfrigérateur ;
un troisième sous-module d'acquisition (322) configuré pour, lorsque l'utilisateur cible a utilisé le réfrigérateur, acquérir des informations de préférences historiques de l'utilisateur cible, qui sont pré-stockées dans le réfrigérateur, comme les informations de préférences cibles ; et
un sous-module de recherche (323) configuré pour, lorsque l'utilisateur cible n'a jamais utilisé le réfrigérateur, rechercher les informations de préférences cibles de l'utilisateur cible à travers un réseau local auquel le réfrigérateur est connecté ;
où les informations de préférences cibles contiennent au moins un type de nourriture cible, une heure de dîner cible et un état de nourriture cible ;
un deuxième module de détermination (330) configuré pour déterminer une nourriture cible à partir de la nourriture actuellement conservée dans le réfrigérateur au moyen d'une caméra disposée à l'intérieur du réfrigérateur ; et
un module de régulation (340) configuré pour réguler une température d'une région dans laquelle la nourriture cible est conservée, de telle sorte que la nourriture cible atteint l'état de nourriture cible à l'heure de dîner cible ;
où le premier module de détermination (310) comprend au moins l'un d'entre :
un premier sous-module de détermination (311) configuré pour déterminer un premier utilisateur qui s'est connecté à une application APP de gestion du réfrigérateur comme l'utilisateur cible, où l'application APP de gestion du réfrigérateur a été associée précédemment au réfrigérateur ;
un deuxième sous-module de détermination (312) configuré pour déterminer un deuxième utilisateur qui est en ligne à travers un réseau local auquel le réfrigérateur est connecté, comme l'utilisateur cible ;
un premier sous-module d'acquisition (313) configuré pour acquérir des informations d'emplacement au sujet d'un emplacement courant d'un terminal au moyen d'un système de navigation par satellite, où le terminal a été précédemment associé au réfrigérateur, et un premier sous-module de décision (314) configuré pour décider si le terminal est situé dans une plage de distance pré-consignée du réfrigérateur sur la base des informations d'emplacement, et un troisième sous-module de détermination (315) configuré pour, lorsque le terminal est dans la plage de distance pré-consignée, déterminer un troisième utilisateur du terminal comme l'utilisateur cible ;
un deuxième sous-module d'acquisition (316) configuré pour acquérir l'utilisateur cible avec une caméra connectée au réfrigérateur ; et
un quatrième sous-module de détermination (317) configuré pour déterminer qu'un quatrième utilisateur a l'intention de prendre un repas en consultant un emploi du temps ou des informations de communications d'au moins un utilisateur, déterminant ainsi le quatrième utilisateur comme l'utilisateur cible.

4. Dispositif selon la revendication 3, dans lequel les informations de préférences cibles contiennent en outre une quantité cible de nourriture pour un repas ; et
le dispositif comprend en outre :
un module de décision (350) configuré pour décider si une quantité actuellement conservée de la nourriture cible dans le réfrigérateur est suffisante sur la base de la quantité cible de nourriture pour un repas ; et
un module d'envoi (360) configuré pour, lorsque la quantité actuellement conservée n'est pas suffisante, envoyer un message de notification à l'utilisateur cible informant l'utilisateur cible que la quantité actuellement conservée de la nourriture cible n'est pas suffisante.

5. Produit de programme ayant des instructions stockées dessus qui, lorsque exécutées par un ou plusieurs processeurs d'un dispositif appliqué dans un réfrigérateur, font que le dispositif mette en oeuvre le procédé selon l'une quelconque des revendications 1 à 2.

6. Programme informatique comprenant des instructions qui, lorsque exécutées sur un processeur d'un dispositif appliqué dans un réfrigérateur, met en oeuvre le procédé selon l'une quelconque des revendications 1-2.
